# EUROPÄISCHE PATENTSCHRIFT

(11) **EP 0 866 831 B1**
(45) Veröffentlichungstag und Bekanntmachung des Hinweises auf die Patenterteilung: **27.03.2002**
(21) Anmeldenummer: 96942298.9
(22) Anmeldetag: 02.12.1996
(51) Int. Cl.: C08J 9/14

(54) **VERFAHREN ZUR HERSTELLUNG VON URETHAN-GRUPPEN ENTHALTENDEN HARTSCHAUMSTOFFEN**
PROCESS FOR PREPARING RIGID FOAMED MATERIALS CONTAINING URETHANE GROUPS
PROCEDE DE PRODUCTION DE MOUSSES RIGIDES CONTENANT DES GROUPES URETHANE

(30) Priorität: 13.12.1995 DE 19546461
(43) Veröffentlichungstag der Anmeldung: 30.09.1998
(73) Patentinhaber: BAYER AG, 51368 Leverkusen (DE)
(72) Erfinder: DIETRICH, Karl, Werner, D-51519 Odenthal (DE); EISEN, Norbert, D-50937 Köln (DE); HEILIG, Gerhard, D-51467 Bergisch Gladbach (DE)
(86) Internationale Anmeldenummer: EP9605335
(87) Internationale Veröffentlichungsnummer: WO9721765

(56) Entgegenhaltungen:
- EP-A- 0 421 269
- WO-A-94/25514
- Dialog Information Services, File 351, Dialog accession no. 010227139, WPI accession no. 95-128394/17, KAO CORP, "Polyurethane foam prodn. giving improved fillability and heat conductivity - using polyol(s) including t-aminoalcohol(s) and foaming agent comprising at least one of 2-methylbutane, n-pentane and cyclopentane"; & JP,A,7053659, 950228, 9517, (Basic)

## Beschreibung

Es ist bekannt, Polyurethan-Hartschaumstoffe mit niedrig siedenden Alkanen zu treiben. Mit Vorteil werden hier cyclische Alkane verwendet, die aufgrund ihrer niedrigen Gas-Wärmeleitfähigkeit einen hervorragenden Beitrag zur Wärmeleitfähigkeit des Schaumstoffes leisten. Hierbei wird vor allen Dingen Cyclopentan verwendet. Cyclopentan hat jedoch aufgrund seines relativ hohen Siedepunktes von 49°C den Nachteil, daß es bei tiefen Temperaturen - und diese sind bei der Anwendung von Polyurethan-Hartschaumstoff als Dämmstoffe bei Kühlmöbeln üblich - kondensiert. Hierdurch trägt es gerade in der Anwendung bei Kühlmöbeln bei diesen tiefen Temperaturen nicht mehr in vollem Maße zur Dämmung bei, darüber hinaus wird durch die unerwünschte Kondensation des Treibmittels ein Unterdruck in der Zelle erzeugt, der wiederum durch erhöhte Schaumfestigkeit bzw. erhöhte Rohdichte aufgefangen werden muß.

Aufgabe der vorliegenden Erfindung war es, Cyclopentan-haltige Treibmittelgemische zur Verfügung zu stellen, bei denen auch bei tiefen Temperaturen die gute Wärmedämmung des Cyclopentans erhalten bleibt.

Überraschenderweise wurde nun gefunden, daß durch Zusatz von geringen Anteilen an niedrigsiedenden Alkanen der C₃- und C₄-Reihe einerseits die günstige Wärmeleitzahl der Cyclopentan-Schäume erhalten werden kann und andererseits der Zell-Innendruck gerade bei tiefen Temperaturen wesentlich erhöht werden kann. Unter tiefer Temperatur werden dabei üblicherweise Temperaturen unterhalb 10°C, z.B. zwischen -30°C und +5°C verstanden.

Wichtig für die Treibmittel-Mischungen ist, daß sie bei Raumtemperatur flüssig sind und die sonst gasförmigen C₃- und C₄-Bestandteile den Dampfdruck der Gesamtmischung nicht über 1 bar erhöhen. Dies wurde gerade für Mischungen aus Cyclopentan mit n- und/oder Isobutan gefunden, so daß sich hier keine Komplikationen für die Polyurethan-Verfahrenstechnik ergeben. Wenn auch der Beitrag zur Verschlechterung der Dämmwirkung durch Beimischung der niedrigsiedenden Alkane meßbar ist, so ist dennoch die Verschlechterung bei Anteilen von 10 bis 25 Gew.-Teilen überraschend gering. Cyclopentan hat üblicherweise eine gute Löslichkeit in den meisten im Polyurethan-Hartschaum verwendeten Polyolen. Niedrig-siedende, aliphatische Alkane besitzen eine wesentlich schlechtere Löslichkeit, so daß die Beimischung von C₃- und C₄-Alkanen zum Cyclopentan zur Verschlechterung der Löslichkeit des Treibmittels führt. Hier werden nun mit Vorteil Polyole verwendet, welche auf aromatischen Aminen gestartet sind; diese besitzen auch gegenüber acyclischen Alkanen eine ausgezeichnete Löslichkeit.

Der Gegenstand der vorliegenden Erfindung ist in Auspruch 1 definiert.

Als Polyole und Polyisocyanate können nach dem erfindungsgemäßen Verfahren alle an sich bekannten Ausgangskomponenten eingesetzt werden.

Als Isocyanat-Komponente sind z.B. aromatische Polyisocyanate, wie sie z.B. von W. Siefken in Justus Liebigs Annalen der Chemie, 562, Seiten 75 bis 136, beschrieben werden, beispielsweise solche der Formel

Q(NCO)ₙ

in der
- n: 2 bis 4, vorzugsweise 2, und
- Q: einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einem aromatischen Kohlenwasserstoffrest mit 6 bis 15, vorzugsweise 6 bis 13, C-Atomen oder einen araliphatischen Kohlenwasserstoffrest mit 8 bis 15, vorzugsweise 8 bis 13, C-Atomen bedeuten, z.B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere modifizierte Polyisocyanate, die sich vom 2,4- und 2,6-Toluylendiisocyanat bzw. vom 4,4'- und/oder 2,4'-Diphenylmethandiisocyanat ableiten.

Ausgangskomponenten sind für die Polyolkomponente Verbindungen mit mindestens zwei gegenüber Isocyanaten reaktionsfähigen Wasserstoffatomen und einem Molekulargewicht in der Regel von 62 bis 20 000. Hierunter versteht man neben Aminogruppen, Thiolgruppen oder Carboxylgruppen aufweisenden Verbindungen vorzugsweise Hydroxylgruppen aufweisende Verbindungen, vorzugsweise Polyether, Polyester, Polycarbonate, Polylactone und Polyamide, insbesondere 2 bis 8 Hydroxylgruppen aufweisende Verbindungen, speziell solche vom Molekulargewicht 1000 bis 20 000, z.B. derartige, mindestens 2, in der Regel 2 bis 8, vorzugsweise 2 bis 4, Hydroxylgruppen aufweisende Verbindungen, wie sie für die Herstellung von Polyurethanen an sich bekannt sind und wie sie z.B. in der DE-OS 28 32 253, Seiten 11 bis 18, beschrieben werden. Auch Gemische verschiedener derartiger Verbindungen kommen erfindungsgemäß in Frage.

Gegebenenfalls mitverwendet werden weitere an sich bekannte Hilfs- und Zusatzstoffe, wie Flammschutzmittel, Katalysatoren und Schaumstabilisatoren.

Als Flammschutzmittel werden an sich bekannte Flammschutzmittel, vorzugsweise bei 20°C flüssige Produkte, verwendet.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben. Als Katalysatoren kommen die aus der Polyurethanchemie an sich bekannten Katalysatoren wie tert.-Amine und/oder metallorganische Verbindungen in Frage.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide, können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z.B. auf den Seiten 121 bis 205, beschrieben.

Bei der Schaumherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß geht man im erstgenannten Fall so vor, daß man in die Form so viel schäumfähiges Reaktionsgemisch einträgt, daß der gebildete Schaumstoff die Form gerade ausfüllt. Die Arbeitsweise im letztgenannten Fall besteht darin, daß man mehr schäumfähiges Reaktionsgemisch in die Form einträgt, als zur Ausfüllung des Forminneren mit Schaumstoff notwendig ist. Im letzteren Fall wird somit unter "overcharging" gearbeitet, eine derartige Vefahrensweise ist z.B. aus den US-PS 3 178 490 und 3 182 104 bekannt.

Erfindungsgemäß bevorzugt werden als C₃- und/oder C₄-Alkane n- und/oder Isobutan verwendet.

Neben der erfindungsgemäßen Alkan-Mischung können weiterhin 0,5 bis 4 Gew.-Teile Wasser als Co-Treibmittel verwendet werden. Bevorzugt werden dabei 1,5 bis 3 Gew.-Teile Wasser als Co-Treibmittel verwendet.

Es wird bei der erfindungsgemäßen Herstellung von Polyurethan-Hartschaumstoffen als Polyolkomponente eine Mischung enthaltend 20 bis 65 Gew.-Teile Polyol auf Basis von aromatischen Aminen verwendet.

Ein weiterer Gegenstand der Erfindung sind Treibmittelgemische, welche 5 bis 50 Gew.-Teile C₃- und/oder C₄-Alkane, vorzugsweise n- und/oder Isobutan, sowie 50 bis 95 Gew.-Teile Cyclopentan enthalten.

Gegenstand der Erfindung ist auch die Verwendung der erfindungsgemäß hergestellten Hartschaumstoffe als Zwischenschicht für Verbundelemente und zum Ausschäumen von Hohlräumen im Kühlmöbelbau.

Vorzugsweise wird das erfindungsgemäße Verfahren zur Ausschäumung von Hohlräumen von Kühl- und Kältegeräten verwendet.

Selbstverständlich können auch Schaumstoffe durch Blockverschäumung oder nach dem an sich bekannten Doppeltransportbandverfahren hergestellt werden.

Die nach der Erfindung erhältlichen Hartschaumstoffe finden Anwendung z.B. im Bauwesen sowie für die Dämmung von Fernwärmerohren und Containern.

Die folgenden Beispiele sollen die Erfindung erläutern, ohne sie jedoch in ihrem Umfang zu begrenzen.

### Beispiele

### Beispiel 1 (Vergleichsbeispiel)

| Rezeptur für Polyurethan-Hartschaumstoff | |
|---|---|
| Komponente A | |
| 50 Gew.-Teile | O-Toluylendiamin gestartete Polyether mit Propylenoxid OHZ = 400 |
| 50 Gew.-Teile | Zucker gestartete Polyether mit Propylenoxid OHZ = 380 |
| 2 Gew.-Teile | H₂O |
| 2 Gew.-Teile | Schaumstabilisator B 8423 (Fa. Goldschmidt) |
| 2 Gew.-Teile | Aktivator Desmorapid 726 b (Fa. Bayer AG) |

| Komponente B | |
|---|---|
| 140 Gew.-Teile | rohes MDI (NCO-Gehalt: 31,5 Gew.-%) |

100 Gew.-Teile der Komponente A wurden mit 12 Gew.-Teilen Cyclopentan und 140 Gew.-Teilen der Komponente B mittels eines Rührers (1 000 UpM) bei 20°C gemischt und in einer geschlossenen Form auf 34 kg/m³ verdichtet.

### Beispiel 2 (erfindungsgemäß)

Rezeptur und Verarbeitung erfolgte wie in Beispiel 1; als Treibmittel wurde jedoch eine Mischung aus Cyclopentan und n-Butan im molaren Verhältnis 85 : 15 verwendet.

### Beispiel 3 (erfindungsgemäß)

Analog zu Beispiel 1 und 2.

Die Treibmittelmischung bestand aus Cyclopentan und n-Butan im molaren Verhältnis 80 : 20.

### Beispiel 4 (erfindungsgemäß)

Analog Beispiele 1 bis 3.

Treibmittelmischung aus Cyclopentan und i-Butan im molaren Verhältnis 90 : 10.

### Ergebnisse

Von den in den Beispielen 1 bis 3 hergestellten Schaumstoffplatten wurden die Wärmeleitfähigkeiten und Druckfestigkeiten bestimmt.

**Tabelle**

| Beispiel | Wärmeleitzahl [mW/mK] gemäß DIN 52 616, 24°C | Druckfestigkeit [MPa] gemäß DIN 53 421, bei 10 % Stauchung |
|---|---|---|
| 1 | 21,1 | 0,14 |
| 2 | 21,3 | 0,17 |
| 3 | 21,5 | 0,19 |
| 4 | 21,4 | 0,18 |

Wie die Ergebnisse zeigen, konnte unter Verwendung von n- und i-Butanbeimischungen zu Cyclopentan die Druckfestigkeit bei gleicher Rohdichte der Schaumstoffe verbessert werden.

Die Wärmeleitzahl verschlechterte sich überraschenderweise nicht wesentlich. Bei Verwendung dieser Treibmittelmischungen können somit Schaumstoffe unter weitgehender Beibehaltung der guten Dämmeigenschaften hergestellt werden. Diese können bevorzugt im Kühlmöbelbau eingesetzt werden.

## Patentansprüche

1. Herstellung von Polyurethan-Hartschaumstoffen aus Polyolen und Polyisocyanaten sowie Treibmitteln und gegebenenfalls Schaumhilfsmitteln, **dadurch gekennzeichnet, daß** als Treibmittel eine Mischung aus 5 bis 50 Gew.-Teilen C₃- und/oder C₄-Alkanen und 50 bis 95 Gew.-Teilen Cyclopentan und als Polyolkomponente eine Mischung enthaltend 20 bis 65 Gew.-Teile Polyol auf Basis von aromatischen Aminen verwendet wird.

2. Herstellung von Polyurethan-Hartschaumstoffen gemäß Anspruch 1, **dadurch gekennzeichnet, daß** als C₄-Alkan n-Butan verwendet wird.

3. Herstellung von Polyurethan-Hartschaumstoffen gemäß Anspruch 1, **dadurch gekennzeichnet, daß** als C₄-Alkan Isobutan verwendet wird.

4. Herstellung von Polyurethan-Hartschaumstoffen gemäß Anspruch 1 bis 3, **dadurch gekennzeichnet, daß** neben der erfindungsgemäßen Alkan-Mischung 0,5 bis 4 Gew.-Teile Wasser als Co-Treibmittel verwendet werden.

5. Herstellung von Polyurethan-Hartschaumstoffen gemäß Anspruch 4, **dadurch gekennzeichnet, daß** 1,5 bis 3 Gew.-Teile Wasser als Co-Treibmittel verwendet werden.

6. Verwendung von gemäß einem der Ansprüche 1 bis 5 hergestellten Polyurethan-Hartschaumstoffen als Zwischenschicht für Verbundelemente und zum Ausschäumen von Hohlräumen im Kühlmöbelbau.

## Claims

1. Production of rigid polyurethane foams from polyols and polyisocyanates together with blowing agents and optionally foam auxiliary substances, **characterised in that** the blowing agent used is a mixture of 5 to 50 parts by weight of C₃ and/or C₄ alkanes and 50 to 95 parts by weight of cyclopentane and the polyol component used is a mixture containing 20 to 65 parts by weight of polyol based on aromatic amines.

2. Production of rigid polyurethane foams according to claim 1, **characterised in that** the C₄-alkane used is n-butane.

3. Production of rigid polyurethane foams according to claim 1, **characterised in that** the C₄-alkane used is isobutane.

4. Production of rigid polyurethane foams according to claims 1 to 3, **characterised in that**, in addition to the alkane mixture according to the invention, 0.5 to 4 parts by weight of water are used as a co-blowing agent.

5. Production of rigid polyurethane foams according to claim 4, **characterised in that** 1.5 to 3 parts by weight of water are used as a co-blowing agent.

6. Use of rigid polyurethane foams produced according to any of claims 1 to 5 as an intermediate layer for composite components and for foam filling cavities in refrigerator construction.

## Revendications

1. Préparation de mousses rigides de polyuréthanne à partir de polyols et de polyisocyanates ainsi que d'agents moussants et éventuellement d'auxiliaires de mousses, **caractérisée en ce que** l'on utilise comme agent moussant un mélange constitué de 5 à 50 parties en poids d'alcanes en C₃ et/ou en C₄ et de 50 à 95 parties en poids de cyclopentane et comme constituant polyol un mélange contenant de 20 à 65 parties en poids de polyol à base d'amines aromatiques.

2. Préparation de mousses rigides de polyuréthanne selon la revendication 1, **caractérisée en ce que** l'on utilise comme alcane en C₄ du n-butane.

3. Préparation de mousses rigides de polyuréthanne selon la revendication 1, **caractérisée en ce que** l'on utilise comme alcane en C₄ de l'isobutane.

4. Préparation de mousses rigides de polyuréthanne selon les revendications 1 à 3, **caractérisée en ce que** l'on utilise en plus du mélange d'alcanes selon l'invention de 0,5 à 4 parties en poids d'eau comme co-agent moussant.

5. Préparation de mousses rigides de polyuréthanne selon la revendication 4, **caractérisée en ce que** l'on utilise comme co-agent moussant de 1,5 à 3 parties en poids d'eau.

6. Utilisation de mousses rigides de polyuréthanne préparées selon l'une quelconque des revendications 1 à 5 comme couche intermédiaire pour des éléments composites et pour la mise en mousse d'espaces creux dans la construction de réfrigérateurs.
